Europäisches Patentamt

European Patent Office

Office européen des brevets

(19)

(11) Publication number: **0 028 543**

A1

(12) **EUROPEAN PATENT APPLICATION**

(21) Application number: **80303978.3**

(22) Date of filing: **06.11.80**

(51) Int. Cl.³: **C 01 B 21/16**
**C 01 F 11/46**

(30) Priority: **06.11.79 JP 143675/79**
**19.11.79 JP 149863/79**

(43) Date of publication of application:
**13.05.81 Bulletin 81/19**

(84) Designated Contracting States:
**DE FR GB**

(71) Applicant: **MITSUBISHI GAS CHEMICAL COMPANY, INC.**
**5-2, Marunouchi 2-chome Chiyoda-Ku**
**Tokyo(JP)**

(72) Inventor: **Isshiki, Tomiya**
**14-11, Umegaoka 2-chome Setagaya-ku**
**Tokyo(JP)**

(72) Inventor: **Kohzaki, Toshiaki**
**15-6, Nishikubo-cho Tokiwadaira**
**Matsudo-shi Chiba-ken(JP)**

(72) Inventor: **Takeda, Norio**
**16-6, Jinyamae Tokiwadaira**
**Matsudo-shi Chiba-ken(JP)**

(72) Inventor: **Aoki, Yoshiyuki**
**25-15, Niijuku 5-chome Katsushika-ku**
**Tokyo(JP)**

(74) Representative: **Cropp, John Anthony David et al,**
**MATHYS & SQUIRE 10 Fleet Street**
**London, EC4Y 1AY(GB)**

(54) **Process for simultaneous production of hydrated hydrazine and crystalline gypsum and method of separating hydrazine from a mixture of hydrated hydrazine and crystalline gypsum.**

(57) Hydrated hydrazine and crystalline gypsum are simultaneously produced by reacting at least one hydrazine sulfate salt and lime in the presence of crystalline gypsum as a seed at a temperature of 0 to 150°C and with a molar ratio of the amount of sulfate ion added to the reaction system to the amount of lime added thereto which is in the range of from 0.5:1 to 1:0.5. Also disclosed is a distillation method of separating hydrazine from the reaction products produced above which comprises removing the solid component from said reaction products, charging into a distillation system the remaining hydrazine aqueous solution containing less than 30 wt% of soluble hydrazine sulfate, or less than 10 wt% of calcium hydroxide plus less than 10 wt% calcium sulfate based on the weight of the hydrazine aqueous solution, and continuously distilling hydrazine from the hydrazine aqueous solution.

EP 0 028 543 A1

Croydon Printing Company Ltd.

This invention relates to a process for producing hydrated hydrazine and crystalline gypsum by reacting hydrazine sulfate salt and lime. The invention also relates to a method of distilling aqueous hydrazine, more particularly to a method distilling aqueous hydrazine resulting from the reaction between hydrazine sulfate salt and calcium hydroxide which comprises removing the solid content from said reaction products, charging into a distillation system the remaining hydrazine aqueous solution containing less than 30 wt% of soluble hydrazine sulfate and less than 10 wt% of calcium hydroxide plus less than 10 wt% calcium sulfate based on the weight of the hydrazine aqueous solution, and continuously distilling hydrazine from the hydrazine aqueous solution.

Gypsum is widely used as a set retarder for cement, a construction material such as plaster board, etc. Hydrazine is useful as a boiler descaler and as an important starting material for medicines, agrichemicals and foaming agents.

There are three typical industrial methods to produce aqueous hydrazine; the "Rasching method" wherein dilute aqueous hydrazine formed by oxidation of ammonia or urea with hypochlorite or chlorine is concentrated and distilled; the "azine method" wherein the azine formed by oxidation of ammonia with hypochlorite or hydrogen peroxide in the presence of aliphatic ketone or aldehyde is hydrolyzed under pressure and the resulting hydrolyzate is concentrated and distilled; and a method wherein a hydrazine sulfate salt is neutralized with a neutralizing agent such as ammonia and the neutralized hydrazine sulfate is concentrated and distilled. However, it takes much electricity to produce the chlorine used in the Rasching method, and the price of chlorine will increase in the future. Also, the Rasching method consumes a lot of energy in the distillation step. So, with current concern over 2 "energy crisis", there is great demand for early development of an energy-saving alternative to the Rasching method.

The hydrazine sulfate salt is produced by either hydrolysis of azine with sulfuric acid or by letting sulfuric acid act on a dilute hydrazine solution. A method known as the ketazine process has been recently proposed to produce hydrazine sulfate salts at low cost. When benzophenone is used as a ketone in this method, benzophenone is dehydratively condensed with ammonia to form benzophenoneimine which is then oxidized with air to produce benzophenoneazine (U.S. Patent No. 2,870,206), or benzophenoneazine is produced from benzophenone, ammonia and oxygen through one step (Japanese Patent Publication (laid open) No. 8251/76), and the benzophenoneazine obtained is hydrolyzed with sulfuric acid to form a hydrazine sulfate salt. Therefore, by combining this invention with the step of forming hydrazine sulfate salt in the ketazine process, an economical and industrially very advantageous process for producing hydrated hydrazine is completed.

The following methods are known to produce hydrated hydrazine from hydrazine sulfate salts: an alkali is caused to act on dihydrazine sulfate to form a water-soluble salt the solubility of which is reduced by addition of a water-soluble organic compound, and the resulting precipitate is separated followed by evaporation of all volatiles to recover hydrated hydrazine and the organic compound (Japanese Patent Publication No. 23008/61); ammonia is caused to act on dihydrazine sulfate at low temperature and under pressure, the ammonium sulfate produced is separated and caustic soda in an amount equivalent to that of the residual sulfate radical is added, followed by evaporation of all volatiles (Japanese Patent Publication No. 23009/61). The method described in Japanese Patent Publication No. 23008/61 presents means for removing any undesired water-soluble salt before evaporating all volatiles in the neutralized dihydrazine sulfate, whereas the method of Japanese Patent Publication No. 23009/61 provides protection against reduction in the hydrazine yield due to reverse reaction that may occur in the presence of volatile ammonia during evaporation of all volatiles.

If lime is used as a neutralizing agent, the gypsum formed is so low in solubility in aqueous hydrazine that no step is necessary to reduce its solubility and no provision is necessary for protection against reverse reaction. However, in the reaction between hydrazine sulfate salt and lime, it is important to form easily filterable and washable gypsum so as to minimize the amount of water necessary to wash the product gypsum and to minimize the amount of hydrazine that is discharged from the reaction system together with gypsum. The reaction between hydrazine sulfate salt and lime is a simple neutralization reaction, but precipitation of easily filterable and washable gypsum requires a sophisticated technique and many years of experience. This is vividly illustrated by the history of the production of phosphoric acid by the wet process. Mixing hydrazine sulfate salts and lime without any special means produces very small particles of gypsum which are difficult to filter and wash on an industrial scale.

As a result of various studies to eliminate these defects of the conventional technique, we have accomplished this invention which provides a process for simultaneous production of hydrated hydrazine and crystalline gypsum by reacting hydrazine sulfate salt and lime in the presence of a small amount of crystalline gypsum as a seed at a temperature of 0 to 150°C and in a sulfate ion lime molar ratio of from 0.5:1 to 1:0.5. This invention is hereunder described in detail.

The term "hydrazine sulfate salt" as used herein means any one of all salts of hydrazine and sulfuric acid as well as mixtures thereof, and examples of the term "hydrazine sulfate salt" mean $(N_2H_4)_2 \cdot H_2SO_4$, $N_2H_4 \cdot H_2SO_4$ and $N_2H_4 \cdot 2H_2SO_4$ and mixtures thereof. The hydrazine sulfate salt need not be purified and it may contain a small amount of acid or organic substance. The hydrazine sulfate salt may be supplied as a solid, liquid or slurry, but it is preferably supplied as a liquid because this is easier to handle.

The hydrazine sulfate salt need not be particularly pure, and mixtures of different hydrazine sulfate salts, an aqueous slurry or homogeneous solution of hydrazine sulfate salt, or solid hydrazine sulfate salt or slurry or uniform solution thereof that is contaminated by sulfuric acid or aqueous hydrazine may be used. The hydrazine sulfate salts to be used in this invention include not only commercial hydrazine sulfate salt but also the hydrazine sulfate salt of the type described in Japanese Patent Publication No. 66399/79 which is prepared by hydrolysis of benzophenoneazines, or crude, water-containing hydrazine sulfate salt such as crude hydrazine sulfate salt to which sulfuric acid or the like is attached or an aqueous solution thereof, or crude hydrazine sulfate salt obtained as acidic hydrazine sulfate of low solubility by adding sulfuric acid for recovery of aliphatic azine, or dihydrazine sulfate salt obtained by reacting monohydrazine sulfate and aqueous hydrazine or an aqueous solution thereof.

The term "lime" as used in this invention includes quicklime, slaked lime and mixture thereof, and it is calcium hydroxide and/or calcium oxide that, when contacted by water, immediately reacts therewith to form calcium hydroxide. The lime may be solid but it may be used as an aqueous solution or dispersion. The lime used in this invention need not be particularly pure and it may contain without disadvantage calcium carbonate, calcium sulfate or other impurities that are often contained in lime. The lime used in this invention has so low a solubility in water or aqueous hydrazine that it is preferably ground or emulsified for use in this invention.

The "crystalline gypsum" as used herein means single-crystal gypsum hemihydrate and gypsum dihydrate wherein the single crystal has a length of at least 10 microns, and any form of crystalline gypsum may be used so long as it is in the form of a solid during reaction of hydrazine sulfate salt and lime. An example of gypsum that is not included within the definition of "crystalline gypsum" is gypsum which is produced when hydrazine sulfate salt and lime are mixed together without using any special means, and the liquid reaction mixture obtained is mushy.

The reaction between hydrazine sulfate salt and lime is performed in a slurry form in this invention. The slurry concentration is generally less than 60 wt% , preferably between 10 and 30 wt%. A slurry having a concentration higher than 60 wt% is very poor in fluidity and is difficult to handle. If water is added to the slurry to reduce its concentration, the concentration of the hydrated hydrazine obtained is also decreased. Therefore, according to this invention, part of the filtrate from which gypsum has been separated and the washings of gypsum may be recycled for further use to thereby obtain a concentrated hydrated hydrazine. Before starting the reaction, crystalline gypsum must be present in the reaction system as a seed. Since more gypsum is formed as the reaction proceeds, it is not necessary that the crystalline gypsum added in the reaction system as a seed have a high concentration, but the concentration of crystalline gypsum in the slurry is at least 5 wt% preferably at least 7 wt%.

The amount of lime to be added in the reaction system is determined by the molar ratio of lime to the sulfate ion of hydrazine sulfate salt. For the purpose of this invention, the molar ratio of the amount of sulfate ion added to the reaction system to the amount of lime added thereto being in the range of from 0.5:1 to 1:0.5, and from 0.9:1 to 1:0.9 is particularly preferred. During the reaction, the molar ratio above need not be maintained at the above value. If the object in higher conversion of hydrazine sulfate salt, lime is used in excess, and if the object is better quality of gypsum, excess sulfate ion is used. If the reaction is performed using excess lime, a gypsum slurry containing unreacted lime is produced, but such unreacted lime can be recovered through a suitable filter fabric and subjected to recycling. The molar ratio of hydrazine sulfate salt to lime can be maintained at a certain value by controlling the flow rate and pH, and pH control is preferred when hydrazine sulfate salt and lime contain impurities or vary in their composition.

The reaction of neutralization between hydrazine sulfate salt and lime preferably takes long time to prevent the formation of noncrystalline gypsum. Therefore, the flow rate is controlled to be such that the amount of freshly formed crystalline gypsum is less than 40 wt%/min, preferably less than 20 wt%/min. of the crystalline gypsum present in the reaction system. The neutralization reaction may be performed at a temperature between 0 and 150°C. If the reaction temperature is less than 0°C, very small particles of gypsum are formed, and if the temperature exceeds 150°C, the product hydrazine may be decomposed. Different forms of gypsum are produced depending on the reaction temperature. Gypsum dihydrate is generally formed at less than 90°C, and if this product is desired in this invention, the reaction temperature is preferably less than 90°C. If gypsum hemihydrate is the desired product, a temperature between 115 and 140°C is preferred.

According to this invention, the size of gypsum particles can be varied by the reaction temperature. In the temperature range that produces gypsum dihydrate, gypsum of the greater particle size is formed the higher the reaction temperature, so if gypsum of great particle size is desired, the reaction is performed at higher temperatures. If gypsum of small particle size is desired, low reaction temperature is employed. The reaction between hydrazine sulfate salt and lime may be performed without particular disadvantage in an air atmosphere or inert gas atmosphere. When hydrazine-containing gypsum remains in contact with oxygen for a relatively long period, for instance when gypsum is filtered, hydrazine is decomposed with oxygen, so in order to minimize hydrazine loss, the reaction is preferably performed in an atmosphere where the oxygen partial pressure is lower than that of air.

The mixing and reaction of hydrazine sulfate salt and lime is achieved by (1) adding lime to hydrazine sulfate salt, (2) adding hydrazine sulfate salt to lime, (3) supplying the reactor with given proportions of hydrazine sulfate salt and lime, or (4) supplying the reactor with a constant flow of either one of hydrazine sulfate salt or lime and with an intermittent feed of the other. Either batch process, semi- continuous process or continuous process may be used. The reactor may be a special crystalizing apparatus, but a common vessel type reactor well suits the purpose.

The gypsum produced by the process of this invention described in the foregoing has high purity in that it contains no impurities such as $SO_3^{2-}$, $PO_4^{3-}$ and $F^-$ that contaminate the chemical gypsum.

This invention also relates to the method of neutralizing hydrazine sulfate salt, particularly, the method of distilling aqueous hydrazine that is formed by neutralizing hydrazine sulfate salt with calcium hydroxide. According to the disclosure in Japanese Patent Publication No. 23008/61, a water-soluble organic substance is added to reduce the solubility of sulfate salt of alkali metal or alkaline earth metal formed by treating aqueous dihydrazine sulfate with a hydroxide or oxide of alkali metal or alkaline earth metal, and the precipitating sulfate slat is separated and the aqueous hydrazine containing the remaining organic substance is distilled to thereby obtain concentrated aqueous hydrazine. But this method requires a very complicated procedure to completely remove dihydrazine sulfate before distillation: (1) first, the hydroxide or oxide of alkali metal or alkaline earth metal is used as a neutralizing base in an amount of 0 to 50% in excess of the amount theoretically required to neutralize bonded sulfuric acid; (2) then, a water-soluble organic solvent is added as a precipitating agent for the sulfate salt in an amount of 20 to 500% of the amount of water present; (3) the separation of the sulfate salt is performed at a temperature of 20 to 30°C or a higher temperature, if necessary, to reduce the solubility of the sulfate salt, and the aqueous hydrazine is substantially freed of the sulfate; (4) the so treated aqueous hydrazine is distilled to achieve substantial recovery of the aqueous hydrazine; and (5) at the same time, the hydrazine vapor is directed into a fractioning column where it is separated into pure aqueous hydrazine and the water-soluble organic solvent.

Therefore, if the aqueous hydrazine contains much dissolved or precipitated sulfate salt, the precipitate is difficult to filter out or the aqueous hydrazine may be confined in the crystal of the precipitate.

As a result of various studies to solve these problems, we have found that unlike the sulfate salt formed by neutralization of aqueous dihydrazine sulfate with alkali metal hydroxide or oxide, that formed by neutralization of aqueous dihydrazine sulfate with alkaline earth metal hydroxide or oxide has low solubility in aqueous hydrazine. If neutralization is performed without using any special means, very fine crystals of calcium sulfate result and form a mushy slurry that is very difficult to handle in the subsequent steps. But with a special method of neutralization, most of the sulfate salt obtained by neutralization can be precipitated as easily filterable crystal, and the possiblity of aqueous hydrazine being confined in the crystal water of the precipitate is substantially absent. We continued our study on the method of producing hydrated hydrazine free of impurities, and found a very simple technique for achieving the stated object by continuously distilling aqueous hydrazine that contains less than 30 wt% of soluble dihydrazine sulfate or less than 10 wt% of calcium hydroxide plus less than 10 wt% of calcium sulfate based on the weight of aqueous hydrazine minus the solid content.

There is no particular limitation on the concentration of the aqueous hydrazine used in this invention, and for the purpose of industrial practice, it is generally in the range of from 1 to 50 wt%, preferably from 5 to 40 wt%, more preferably from 8 to 35 wt%, as expressed [by the hydrazine content (g) x 100/(aqueous hydrazine minus the solid content (g))]. A hydrazine concentration less than 1% is not preferred because a great amount of heat is required to concentrate hydrazine. An aqueous hydrazine having a concentration higher than 50% is very advantageous because it results in the production of highly concentrated aqueous hydrazine, but on the other hand, this is not a practical method because such a liquor is difficult to prepare by neutralization and because in case of separating impurities such as calcium sulfate, hydrazine sulfate or calcium hydroxide, hydrazine is lost. The method of preparing the aqueous hydrazine is described above.

The aqueous hydrazine contains either dihydrazine sulfate or calcium hydroxide in excess as an unreacted substance depending upon the molar ratio of sulfate ion $SO_4^{--}$ and calcium ion, $Ca^{++}$ supplied. Needless to say, in case of $SO_4^{--}/Ca^{++} > 1$, aqueous hydrazine containing both calcium sulfate and dihydrazine sulfate is produced, and in case of $SO_4^{--}/Ca^{++} < 1$, aqueous hydrazine containing both calcium sulfate and calcium hydroxide is produced. In case of $SO_4^{--}/Ca^{++} = 1$, no impurities derived from sulfate ion and calcium ion other than those of calcium sulfate are contained in the aqueous hydrazine obtained.

The aqueous hydrazine thus obtained that contains calcium sulfate and dihydrazine sulfate or calcium hydroxide can be distilled either immediately or after separating the precipitating calcium sulfate or calcium hydroxide. Distillation requires no special means at all for reducing the solubility of calcium sulfate and calcium hydroxide in aqueous hydrazine.

Dihydrazine sulfate subjected to distillation in this invention has very high solubility and it will not form a solid precipitate at room temperature if it is contained in aqueous hydrazine solutions in an amount of less than 70 wt%. Therefore, aqueous hydrazine solutions containing dihydrazine sulfate over a wide range can be distilled in this invention. However, it is not practical to let a large amount of unreacted hydrazine sulfate salt be present in the neutralized liquor. For industrial practice, the neutralization liquor preferably contains less than 30 wt%, more preferably less than 10 wt%, of hydrazine sulfate salt. The concentration of dihydrazine sulfate is represented in terms of the soluble content, i.e. hydrazine sulfate (g) x 100/(aqueous hydrazine minus the solid content (g)).

The amount each of calcium sulfate and calcium hydroxide to be supplied to the distillation system in this invention must be less than 10 wt% of the aqueous hydrazine. The solubilities of calcium sulfate and calcium hydroxide in aqueous hydrazine solutions of various concentrations are less than 0.3 wt% and 0.2 wt%, respectively. Therefore, aqueous hydrazine containing a large amount of calcium sulfate or calcium hydroxide is supplied in the form of a slurry. If the concentration of calcium sulfate and calcium hydroxide supplied to the reaction system is more 10 wt%, distillation of the slightest amount of aqueous hydrazine produces a deposit of concentrated calcium sulfate in the distillator and this results in reduced efficiency of evaporation of the aqueous hydrazine.

Calcium sulfate and calcium hydroxide accumulated in the distillator is continuously or intermittently discharged from the reaction system so that the total of their amounts is held less than 40 wt%, preferably less than 20 wt%. If the concentration of the total of calcium sulfate and calcium hydroxide exceeds 40 wt%, the two compounds form a deposit on the inner walls of the distillator that is detrimental to the distillation procedure.

Since the solubility of dihydrazine sulfate is very great, it can be concentrated to high level in the distillator, but if aqueous hydrazine contains more than 70 wt% of dihydrazine sulfate, a foam like soapsuds is formed in the solution being distilled and this may prevent normal operation of the distillator. Therefore, aqueous hydrazine generally contains less than 70 wt%, preferably less than 50 wt%, of dihydrazine sulfate.

When aqueous hydrazine supplied as a uniform aqueous solution is concentrated, saturated or supersaturated calcium sulfate or calcium hydroxide may form scale that is deposited on the walls of the distillator. If such case is expected, a seed crystal of calcium sulfate is preferably included in the still system so as to grow the crystal of calcium sulfate in the distillator.

Only a very small amount of mother liquor containing hydrazine or dihydrazine sulfate will be confined in the crystal water of calcium sulfate or calcium hydroxide that is precipitated in the distillator by concentration. The slurry withdrawn from the distillator contains calcium sulfate and dihydrazine sulfate or calcium hydroxide in aqueous hydrazine, so it can be recycled to the neutralization step together with the washings of the crystal either directly or after separation of the crystals. The slurry withdrawn from the distillator must be freed of the crystals before it is subjected to distillation again. This is necessary for minimizing the loss of hydrazine content.

There is no particular limitation on the conditions of distillation performed in this invention, and vacuum distillation, atmospheric distillation or superatmospheric distillation may be employed. In view of the characteristics of aqueous hydrazine, too much heat should not be applied, and the preferred temperature range is from 0 to 150°C. Pressure conditions may be less than 3 atm. and more than 1 mm of mercury column, preferably less than 2 atm. and more than 10 mm Hg, and more preferably less than 1 atm. and more than 20 mm Hg. Distillation may be performed either in a flash continuous distillator or columnar continuous distillator.

According to this invention, hydrazine sulfate salt and calcium hydroxide may be supplied continuously to the distillator where neutralization and distillation are achieved simultaneously. Another preferred embodiment is to stir the reaction mixture thoroughly or forcibly recycle it for the purpose of preventing the deposition of calcium sulfate or calcium hydroxide crystal in the distillator.

As described in the foregoing this invention provides a very simple and effective distilling method for producing aqueous hydrazine that could not be achieved by the prior art technique.

The present invention is illustrated by the non-limiting Examples as described in the following.

Example 1

A 500 ml four necked flask having a stirrer, thermometer and a reflux condenser was charged with 5.2 g of monohydrazine sulfate, 32.5 g of dihydrazine sulfate, 10 g of crystalline gypsum (gypsum dihydrate in platelike crystal having an average length of 30 μ) and 60 g of water and heated in an oil bath under stirring. When the temperature of the reaction mixture reached 80°C, 247 g of 7.2% milk of lime that had been heated to 80°C in a separate vessel was added dropwise under stirring over a period of 30 minutes (sulfate ion/lime molar ratio = 1:1). Following stirring for another 30 minutes, the reaction mixture was transferred to a small centrifuge (680 g max. with 200 mesh filter fabric) wherein it was centrifuged in a nitrogen atmosphere to separate crystalline gypsum. The crystalline gypsum so obtained was washed with 69 g of water and centrifuged in a small centrifuge.

Hydrated hydrazine in the gypsum filtrate and washings was analyzed by iodometry: the content of hydrated hydrazine in the filtrate was 7.26%, that in gypsum before washing was 0.8%, and that in washed gypsum was 700 ppm. The only loss of hydrated hydrazine was that due to hydrated hydrazine deposited on the washed gypsum, and the recovery efficiency of hydrazine was 99.8%.

The calcium ion content ($Ca^{2+}$) in the filtrate was measured by chelate titration and it was 0.09% (at 80°C). The washed gypsum was washed with methanol, dried at 60°C, and weighed. Its solid content was 90%. It was calculated on the basis of hydration ratio. The crystal of the product gypsum dihydrate was platelike and was 100-200 µ long by 15-35 µ wide under microscopic observation

Example 2

The procedure of Example 1 was repeated except that the flask was charged with 39 g of dihydrazine sulfate, 10 g of crystalline gypsum and 60 g of water and that 148.5 g of 7.2% milk of lime was added dropwise (sulfate radical/lime molar ratio = 1:0.6). A filtrate comprising 6.5% hydrated hydrazine containing 7.1% dihydrazine sulfate was obtained. The crystal of the product gypsum dihydrate was platelike and was 100-200 µ long and 10-40 µ wide.

Example 3

The procedure of Example 1 was repeated except that the flask was charged with 23.5 g of dihydrazine sulfate, 10 g of crystalline gypsum and 60 g of water, 248.5 g of 7.2% milk of lime (sulfate radical to lime molar ratio = 0.6:1) was added dropwise, and that the liquid reaction product was filtered through gauze. A filtrate composed of 4.65% hydrated hydrazine was obtained. The crystal of the product gypsum dihydrate was platelike which was 120-250 µ long and 20-40 µ wide. The gypsum contained 2.5 wt% of lime.

Example 4

The procedure of Example 1 was repeated except that the reactor was charged with milk of lime and a solution of hydrazine sulfate salt was added dropwise. A filtrate composed of 7.25% aqueous solution of hydrated hydrazine was obtained.

The crystal of the product gypsum dihydrate comprised a few single crystals (70-200 μ long and 15-35 μ wide) combined together.

Example 5

The procedure of Example 1 was repeated except that the reaction temperature was 130°C. At filtrate composed of 7.25% aqueous solution of hydrated hydrazine was obtained. The crystal of the product gypsum was acicular and was 8-20 μ long and 2-5 μ wide. The gypsum was identified as gypsum hemihydrate by IR analysis.

Example 6

The feed stocks were prepared in the following manner.

Solution of dihydrazine sulfate and hydrated hydrazine

815 g of commercial monohydrazine sulfate, 431 g of commercial hydrated hydrazine of concentration of 80% and 1040 g of water were mixed under cooling with water. The resulting solution of dihydrazine sulfate and hydrated hydrazine was supplied only at the start of the reaction, and during the reaction, a dihydrazine sulfate/hydrated hydrazine solution prepared in the following manner was supplied: 1471 g of the filtrate (containing 23-24% hydrated hydrazine) obtained by filtering crystalline gypsum from the liquid reaction product containing crystalline gypsum was mixed with 815 g of monohydrazine sulfate under cooling with water.

Milk of lime

480 g of commercial slaked lime powder was suspended in 5980 g of 19% hydrated hydrazine (commercial 80% hydrated hydrazine diluted with water). The resulting milk of lime was supplied only at the start of the reaction, and during the reaction, milk of lime prepared in the following manner was supplied: 4800 g of the filtrate (containing 23-24% of hydrated hydrazine) obtained by filtering crystalline gypsum from the liquid reaction product containing crystalline gypsum was mixed with 480 g of commercial slaked lime powder and 1180 g of the washings (containing 1.0-1.2% of hydrated hydrazine) obtained by washing the filtered crystalline gypsum with water.

Before starting the reaction, a 500 ml stainless steel vessel having a stirrer, thermometer, reflux condenser, pH electrode, baffle, heating jacket, two supply pipes, and an overflow pipe was charged with 52 g of crystalline gypsum having a center diameter ($D_{50}$) of 70 μ and 348 g of 23.4% hydrated hydrazine (commercial 80% hydrated hydrazine diluted with water) and the reaction mixture was heated with the jacket under stirring at 500 rpm. When the temperature of the reaction mixture reached 80°C, a freshly prepared feedstock was supplied to the reactor. Dihydrazine sulfate-hydrated hydrazine solution was supplied continuously in the manner described above with a metering pump at a rate of 229 g/hr. Milk of lime was supplied by repeating the start/stop cycle of a supply pump which was coupled with the pH meter to maintain the liquid reaction mixture at a pH of 9.8. The liquid reaction product coming from the overflow pipe was passed through an adjoining cooler where it was cooled to room temperature. Then, the reaction product was transfered to a small centrifuge (680 g) where it was separated into crystalline gypsum and filtrate. The crystalline gypsum was washed with a nearly equal volume of water and centrifuged again to recover washings that contained hydrated hydrazine deposited on the crystalline gypsum and to obtain crystalline gypsum substantially free of hydrated hydrazine. All washings were recycled for use as a starting material for the preparation of milk of lime.

As a material for preparing dihydrazine sulfate-hydrated hydrazine solution to be recycled, 4.7/5.7 of the filtrate containing 23.4-23.5% hydrated hydrazine was recycled, and the remaining part was recovered as a crude product. After all of the freshly prepared starting materials were subjected to the reaction, the recycled materials were started to be used. No trouble occurred throughout the operation of the reactor for 84 hours, and the average sulfate radical/lime molar ratio achieved was 1:1.04 and the average residence time was 45 minutes. Analysis of the composition of the reaction mixture was made every 8 hours, and the respective average values were as follows: 23.42% for the hydrated hydrazine content in the filtrate and 400 ppm for the hydrated hydrazine content in the washed crystalline gypsum. About 100 g of the product crystalline gypsum was sampled every 8 hours, washed with methanol, dried at 60°C and weighed. The percent dehydration was calculated from the dry weight of the gypsum, and its particle size distribution was determined by sieving. The crystalline gypsum was gypsum dihydrate whose crystal was circular. The solid content of the gypsum was 95.0% and its average center diameter ($D_{50}$) was 250 µ. The crude hydrazine product was purified by evaporation with a 1-liter vacuum simple evaporator and the purified product was analyzed in compliance with the procedure for a reagent JIS K8871-61. No volatile content, chloride, sulfate salt, heavy metal, or iron was detected.

Example 7

Continuous simple distillation was performed with a stainless steel distillation column flanged at both ends. (ID 70 mm, HT 300 mm, internal vol. 1200 ml) having a glass level indicator, Bourdon tube pressure gauge, stirrer, sheathed thermocouple and valve for withdrawing the column liquor. The column was externally heated with an electric heater. The substance that was subjected to distillation was a uniform solution comprising 11.5 wt% of hydrazine, 1.4 wt% of dihydrazine sulfate and 0.2 wt% of dissolved calcium sulfate. Distillation was conducted at a pressure of 320 mm (mercury column). The temperature of the feed was about 87°C. The column liquor was maintained at about 500 ml. Before starting distillation, the still was charged with 6 g of 150-200 mesh seed crystal of calcium sulfate. The starting feed stocks were supplied at an average rate of 220g/hr. The column liquor was withdrawn from the bottom of the column intermittently, and about 30 g of column liquor containing a calcium sulfate slurry was withdrawn every 10 hours. The distillation column was operated for 120 hours. The average composition of the column liquor withdrawn from the bottom of the column comprised 6.1 wt% of calcium sulfate, 34 wt% of dihydrazine sulfate, and 29 wt% of hydrazine. The concentrations of hydrazine and dihydrazine sulfate were based on the aqueous hydrazine solution minus the solid content. The overall hydrazine balance including hydrazine sulfate was 99.6%. There was no deposit of calcium sulfate on the wall of the distillation column.

Example 8

Using a distillation column identical with what was used in Example 7, a slurry containing 6.4 wt% hydrazine, 3.0 wt% calcium sulfate and 0.7 wt% calcium hydroxide was subjected to continuous atmospheric distillation without filtration. The temperature of the column liquor on the bottom was 116°C. The volume of the column liquor was held at about 500 ml. The feedstock was supplied at an average rate of 150 g/hr. About 60 g of the slurry concentrated to about 12 wt% was withdrawn from the bottom of the column every 5 hours. The slurry so withdrawn was cooled to ordinary temperature with minimum contact with air. The slurry composed of a mixture of calcium sulfate and calcium hydroxide was filtered and washed twice with 10 g of water. The filtrate and washings were recycled to the distillation column with the feedstock. The continuous distillation for 80 hours gave an overall hydrazine balance of 99.4%.

CLAIMS:

1.    A process for simultaneous production of hydrated hydrazine and crystalline gypsum characterised in that at least one hydrazine sulfate salt is reacted with lime in the presence of crystalline gypsum as a seed at a temperature of 0 to 150°C, and the molar ratio of the amount of sulfate ion added to the reaction system to the amount of lime added thereto is in the range of from 0.5:1 to 1:0.5.

2.    The process as defined in Claim 1 characterised in that the hydrazine sulfate salt is selected from the group consisting of $(N_2H_4)_2 \cdot H_2SO_4$, $N_2H_4 \cdot H_2SO_4$, $N_2H_4 \cdot 2H_2SO_4$ and mixtures thereof.

3.    The process as defined in Claim 1 or Claim 2 characterised in that the lime is selected from the group consisting of quicklime, slaked lime and mixture thereof.

4.    The process as defined in Claim 1, Claim 2 or Claim 3 characterised in that the reaction between hydrazine sulfate salt and lime is performed in a slurry form.

5.    The process as defined in Claim 4 characterised in that the slurry concentration is less than 60% by weight.

6.    The process as defined in any one of Claims 1 to 5 characterised in that the concentration of crystalline gypsum is maintained at least 5 wt%.

7.    The process as defined in any one of Claims 1 to 6 characterised in that the flow rate is controlled such that the amount of freshly formed crystalline gypsum is less than 40 wt% of the crystalline gypsum present in the reaction system per minute.

8.    The process as defined in any one of Claims 1 to 7 characterised in that the reaction is performed at a temperature between 0°C and 150°C.

9.    A distillation method of separating hydrazine from the reaction products produced by the process claimed in any one of Claims 1 to 8 characterised in that it comprises:

    removing the solid component from said reaction products, charging into a distillation system the remaining hydrazine aqueous solution containing less than 30 wt% of soluble hydrazine sulfate, or less than 10 wt% of calcium hydroxide plus less than 10 wt% calcium sulfate based on the weight of the hydrazine aqueous solution, and

    continuously distilling hydrazine from the hydrazine aqueous solution.

0028543

- 18 -

10.    The distillation method as defined in Claim 9 characterised in that the concentration of hydrazine sulfate in the distillation system is held at less than 70 wt% based on the hydrazine aqueous solution not containing a solid component.

11.    The distillation method as defined in Claim 9 or Claim 10 characterised in that the total of calcium hydroxide and calcium sulfate in the distillation system is held at less than 40 wt% based on the hydrazine aqueous solution not containing a solid component.

12.    The distillation method as defined in Claim 11 wherein a seed crystal of calcium sulfate is added before the start of distillation.

European Patent
Office

**EUROPEAN SEARCH REPORT**

Application number

EP 80 30 3978.3

| | **DOCUMENTS CONSIDERED TO·BE RELEVANT** | | CLASSIFICATION OF THE APPLICATION (Int. Cl.³) |
|---|---|---|---|
| Category | Citation of document with indication, where appropriate, of relevant passages | Relevant to claim | |
| | DE - C - 1 087 119 (BAYER AG) <br> * claim 1; column 1, lines 33 to 37 * <br> -- | 1-3,9 | C 01 B 21/16 <br> C 01 F 11/46 |
| | DE - A1 - 2 554 078 (BÜTTNER-SCHILDE-HAAS) <br> * claim 1 * <br> -- | 1 | |
| A | DE - B - 1 268 121 (BAYER AG) <br> -- | | **TECHNICAL FIELDS SEARCHED** (Int. Cl.³) |
| A | US - A - 2 740 692 (D.W. RYKER et al.) <br> -- | | |
| D | US - A - 2 870 206 (R. MEYER et al.) <br> ---- | | C 01 B 21/00 <br> C 01 F 11/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

The present search report has been drawn up for all claims

| Place of search | Date of completion of the search | Examiner |
|---|---|---|
| Berlin | 02-02-1981 | KESTEN |

EPO Form 1503.1  06.78